# EUROPÄISCHE PATENTANMELDUNG

(11) **EP 2 071 490 A1**
(43) Veröffentlichungstag der Anmeldung: **17.06.2009**
(21) Anmeldenummer: 07122654.2
(22) Anmeldetag: 07.12.2007
(51) Int. Cl.: G06K 7/14, G06Q 10/00

(54) **Vorrichtung und Verfahren zum Identifizieren eines Objekts**

(71) Anmelder: Agfa HealthCare NV, 2640 Mortsel (BE)
(72) Erfinder: Hinz, Jonas, 54292 Trier (DE); Dimmer, Oliver, 54329 Konz-Roscheid (DE)
(74) Vertreter: Linsmeier, Josef

(57) **Zusammenfassung**

Die Erfindung betrifft eine Vorrichtung (10) und ein entsprechendes Verfahren zum Identifizieren eines Objekts (20) mit einem Artikel in Abhängigkeit von einer erfassten Barcodeinformation eines Barcodes (30), mit dem das Objekt (20) gekennzeichnet ist. Dabei sind in einem Speicher (60) mehrere Artikelnummern abgespeichert, die einerseits mehreren Artikeln und andererseits mehreren unterschiedlichen Artikelnummertypen zugeordnet sind. Die erfasste Barcodeinformation wird erfindungsgemäß in Abhängigkeit von einer vorgegebenen Reihenfolge der Artikelnummertypen mit in dem Speicher (60) abgespeicherten Artikelnummern verglichen. Im Falle einer Übereinstimmung der erfassten Barcodeinformation mit einer der abgespeicherten Artikelnummern wird das Objekt (20) mit dem dieser Artikelnummer zugeordneten Artikel identifiziert.

## Beschreibung

Die vorliegende Erfindung betrifft eine Vorrichtung sowie ein entsprechendes Verfahren zum Identifizieren eines Objekts mit einem Artikel in Abhängigkeit von einer erfassten Barcodeinformation eines Barcodes, mit dem das Objekt gekennzeichnet ist.

In Versorgungseinrichtungen, wie z.B. einem Krankenhaus oder einer Apotheke, wird täglich eine Vielzahl von Gütern benötigt, wie z.B. Arzneimittel und sonstige, insbesondere medizinische, Materialien und Gerätschaften, Lebensmittel oder Speisen, um einen reibungslosen Betrieb bei der Pflege und Versorgung von Patienten zu gewährleisten. Dazu ist eine gut organisierte Materialwirtschaft erforderlich, die durch geeignete Systeme unterstützt wird. Teil solcher Systeme sind scannergestützte Erfassungseinrichtungen, mit denen sich u. a. mit bestimmten Kennungen versehene Belege oder Objekte, wie z.B. Medikamentenpackungen, erfassen lassen. Als Kennungen dienen dabei Barcodes, die auch als Strichcodes oder Balkencodes bezeichnet werden und von der Erfassungseinrichtung gelesen werden können.

Es existieren verschiedene Typen von Barcodes, wie z.B. EAN8, EAN13, Code39, Code128 oder Interleaved 2 of 5. Beispielsweise werden die Barcodetypen EAN8 und EAN13, die eine Länge von acht bzw. dreizehn Ziffern aufweisen, zur Kennzeichnung von allgemeinen Handelsartikeln verwendet, wobei das Kürzel "EAN" den Artikelnummertyp "European Article Number" bezeichnet. Dagegen wird der Barcodetyp Code39 mit einer festen Länge von sieben Ziffern für den Artikelnummertyp "Pharmazentralnummer" (PZN) verwendet, welche für Arzneimittel und andere Apothekenartikel vergeben wird.

Bei der Identifikation von Objekten werden die Barcodes, mit denen die einzelnen Objekte gekennzeichnet sind, von einer scannergestützten Erfassungseinrichtung zunächst gelesen und decodiert. Anhand der jeweils erhaltenen Barcodeinformation, welche im Wesentlichen eine Zeichenfolge umfasst, wird schließlich der dieser Barcodeinformation zugeordnete Artikel ermittelt, mit welchem schließlich das Objekt identifiziert wird. Hierbei ist üblicherweise die manuelle Vorgabe des jeweiligen Barcode- oder Artikelnummertyps erforderlich, damit das Objekt anhand der Barcodeinformation eindeutig identifiziert werden kann.

Bei der Identifizierung einer Reihe von mit Barcodes unterschiedlichen Barcode- bzw. Artikelnummertyps gekennzeichneten Objekten muss in der Regel jedes Mal, wenn sich der Barcode- bzw. Artikelnummertyp ändert, dieser durch den Benutzer manuell vorgegeben werden, damit das Objekt korrekt identifiziert werden kann. In solchen Fällen ist das Identifizieren von Objekten für den Benutzer relativ aufwändig.

Es ist Aufgabe der vorliegenden Erfindung, auf technisch einfache Weise ein komfortables Identifizieren eines Objekts anhand einer erfassten Barcodeinformation eines Barcodes, mit dem das Objekt gekennzeichnet ist, zu gewährleisten.

Diese Aufgabe wird durch eine Vorrichtung gemäß der technischen Lehre des Anspruchs 1 sowie durch ein entsprechendes Verfahren gemäß der technischen Lehre des Anspruchs 14 gelöst.

Erfindungsgemäß ist ein Speicher vorhanden, in dem mehrere Artikelnummern abgespeichert sind. Die Artikelnummern sind einerseits mehreren Artikeln und andererseits mehreren unterschiedlichen Artikelnummertypen zugeordnet. Eine Steuerung ist so ausgestaltet, dass sie die erfasste Barcodeinformation in Abhängigkeit von einer vorgegebenen Reihenfolge der Artikelnummertypen mit in dem Speicher abgespeicherten Artikelnummern vergleicht und im Falle einer Übereinstimmung der erfassten Barcodeinformation mit einer der abgespeicherten Artikelnummern das Objekt mit dem dieser Artikelnummer zugeordneten Artikel identifiziert.

Die erfasste Barcodeinformation wird hierbei zuerst nur mit denjenigen gespeicherten Artikelnummern verglichen, die dem Artikelnummertyp zugeordnet sind, der an erster Stelle der vorgegebenen Reihenfolge der Artikelnummertypen steht. Im Falle einer Übereinstimmung der erfassten Barcodeinformation mit einer der abgespeicherten Artikelnummern dieses Artikelnummertyps wird das Objekt mit dem dieser Artikelnummer zugeordneten Artikel identifiziert. Falls keine Übereinstimmung der erfassten Barcodeinformation mit einer der abgespeicherten Artikelnummern dieses Artikelnummertyps festgestellt wird, wird die erfasste Barcodeinformation in einem oder mehreren weiteren Schritten mit weiteren gespeicherten Artikelnummern verglichen, die jeweils dem Artikelnummertyp zugeordnet sind, der an nächster Stelle, d.h. an zweiter, dritter usw. Stelle, der vorgegebenen Reihenfolge der Artikelnummertypen steht.

Im Gegensatz zu den bekannten Vorrichtungen und Verfahren, bei denen während des Identifizierens einer Reihe unterschiedlicher Objekte in der Regel immer wieder eine Vorgabe des jeweiligen Barcode- oder Artikelnummertyps durch den Benutzer erforderlich ist, ist bei der vorliegenden Erfindung lediglich eine einmalige Vorgabe einer Reihenfolge von Artikelnummerntypen vor dem Beginn des Identifizierens der unterschiedlichen Objekte erforderlich. Durch die vorgegebene Reihenfolge von Artikelnummertypen, gemäß welcher die jeweiligen gespeicherten Artikelnummern mit der erfassten Barcodeinformation verglichen werden, wird der Aufwand für die Ermittlung derjenigen Artikelnummer, welche der erfassten Barcodeinformation entspricht, stark reduziert.

Insgesamt erlaubt die Erfindung auf technisch einfache Weise ein komfortables und schnelles Identifizieren von Objekten anhand der erfassten Barcodeinformation.

Ein "Objekt" im Sinne der vorliegenden Erfindung kann eine zu identifizierende Sache, ein zu identifizierender Fall oder aber auch eine zu identifizierende Person, beispielsweise ein Patient, sein. Der Barcode, mit dem das Objekt gekennzeichnet ist, kann auf der Sache selbst, z.B. auf einer Medikamentenpackung, oder einem der Sache, dem Fall bzw. der Person zugeordneten Barcodeträger aufgebracht sein, wie z.B. einem Etikett am Bett eines Patienten.

Der Begriff "Artikel" im Sinne der Erfindung bezeichnet die Identität des jeweiligen Objekts, d.h. der Sache, des Falles bzw. der Person, oder die Zugehörigkeit des Objekts zu einer Gruppe gleichartiger Objekte, welche durch verschiedene Eigenschaften oder Merkmale, auch Stammdatenmerkmale genannt, charakterisiert sind. Diese Eigenschaften bzw. Merkmale umfassen beispielsweise eine Bezeichnung, einen Namen, eine Gebindegröße etc.

Handelt es sich bei dem Objekt z.B. um eine konkrete Medikamentenpackung, so steht der Artikel, mit dem diese Medikamentenpackung identifiziert wird, abstrakt für ein durch einen bestimmten Namen, z.B. "ABC," und Wirkstoff, z.B. "XYZ", sowie einer bestimmten Packungsgröße, z.B. X Tabletten, charakterisiertes Medikament. Ist das Objekt dagegen ein Etikett mit Barcode am Bett des Patienten, so steht der Artikel, mit dem das Etikett identifiziert wird, für die Person, die z.B. durch Name, Geburtsdatum und Wohnort gekennzeichnet ist, oder für den medizinischen oder organisatorischen Fall, der z.B. durch den Einlieferungstag und die Diagnose gekennzeichnet ist.

Je nach Einsatzgebiet der Erfindung können eine Vielzahl verschiedener Artikelnummertypen vorgesehen sein. Beim Einsatz der Erfindung in einem Krankenhaus oder einer Apotheke sind insbesondere folgende Artikelnummertypen vorgesehen: PZN (Pharmazentralnummer), EAN (European Article Number), IAN (interne Artikelnummer) und LAN (Lieferanten-Artikelnummer des Lieferanten des Objekts).

Prinzipiell können den Artikeln jeweils mehrere Artikelnummern unterschiedlichen Artikelnummertyps zugeordnet sein. So kann ein Medikament sowohl eine Artikelnummer des Typs PZN als auch eine Artikelnummer des Typs IAN aufweisen, falls dieses Medikament zu verschiedenen Zwecken zusätzlich zur PZN eine eigene interne Artikelnummer erhält.

Vorzugsweise ist eine im Speicher gespeicherte Artikelnummer, welcher ein bestimmter Artikelnummertyp zugeordnet ist, einem Artikel eindeutig zugeordnet. Dies hat zur Folge, dass bei einer Übereinstimmung der erfassten Barcodeinformation eines Barcodes mit einer Artikelnummer eines bestimmten Typs das mit dem Barcode gekennzeichnete Objekt eindeutig mit dem dieser Artikelnummer zugeordneten Artikel eindeutig identifiziert werden kann.

Vorzugsweise ist die Reihenfolge der Artikelnummertypen so vorgegeben, dass für die jeweilige Anwendung eine hohe Wahrscheinlichkeit vorhanden ist, die gesuchte Artikelnummer unter dem zuerst zu überprüfenden Artikelnummertyp zu finden. Beispielsweise kann für eine Anwendung in einer Apotheke die Reihenfolge der Artikelnummertypen vorteilhafterweise so vorgegeben sein, dass als erster Artikelnummertyp die Pharmazentralnummer PZN vorgegeben ist. Dies bedeutet, dass zum Identifizieren eines mit einem Barcode versehenen Objekts, wie z.B. einer Medikamentenpackung, bei der Suche nach derjenigen Artikelnummer, der die erfasste Barcodeinformation des Barcodes entspricht, zuerst diejenigen gespeicherten Artikelnummern mit der erfassten Barcodeinformation verglichen werden, die dem Artikelnummertyp PZN zugeordnet sind.

In einer vorteilhaften Ausgestaltung der Erfindung ist eine Erfassungseinrichtung zum Lesen des Barcodes und zum Erfassen der in ihm enthaltenen Barcodeinformation vorhanden. Die Erfassungseinrichtung ist zum Übermitteln der erfassten Barcodeinformation des gelesenen Barcodes an die Steuerung mit dieser verbunden. Hierdurch lässt sich auf einfache Weise die Barcodeinformation des Barcodes erfassen und zum Identifizieren des Objekts an die Steuerung übertragen.

In einer weiteren vorteilhaften Ausgestaltung ist die Steuerung ferner so ausgestaltet, dass sie die erfasste Barcodeinformation zusätzlich in Abhängigkeit von wenigstens einer Eigenschaft der erfassten Barcodeinformation mit in dem Speicher abgespeicherten Artikelnummern vergleicht. Dadurch lässt sich das Objekt noch effizienter identifizieren. Beispielsweise kann eine Eigenschaft der erfassten Barcodeinformation deren Länge, d. h. deren Anzahl von Zeichen, Ziffern und Sonderzeichen, sein. Anhand dieser Eigenschaft der Barcodeinformation kann dann die Reihenfolge der Artikelnummertypen vorgegeben oder ggf. eine bereits vorgegebene Reihenfolge abgeändert werden.

In einer bevorzugten Ausgestaltung dieser Variante der Erfindung ist die Steuerung so ausgestaltet, dass ein Artikelnummertyp der vorgegebenen Reihenfolge der Artikelnummertypen, insbesondere der in der vorgegebenen Reihenfolge erste Artikelnummertyp, in Abhängigkeit von der wenigstens einen Eigenschaft der erfassten Barcodeinformation beim Vergleichen der erfassten Barcodeinformation mit in dem Speicher abgespeicherten Artikelnummern übersprungen wird. Beispielsweise ist es im Falle einer erfassten Barcodeinformation, die eine Länge von dreizehn Zeichen aufweist, nicht erforderlich, die erfasste Barcodeinformation mit abgespeicherten Artikelnummern zu vergleichen, die dem Artikelnummertyp PZN zugeordnet sind, da dieser Artikelnummertyp üblicherweise mit einem Barcode des Typs Code39 codiert wird und folglich eine Länge von sieben Zeichen aufweist. Eine gespeicherte Artikelnummer, die dem Artikelnummertyp PZN zugeordnet ist, unterscheidet sich somit in ihrer Längeneigenschaft von der erfassten Barcodeinformation. Sofern der Artikelnummertyp PZN in der vorgegebenen Reihenfolge der Artikelnummertypen vor anderen Artikelnummertypen platziert ist, wie z.B. einem Artikelnummertyp EAN, der Artikelnummern mit einer Länge von dreizehn Zeichen haben kann, wird der Artikelnummertyp PZN und damit alle diesem Artikelnummertyp zugeordneten abgespeicherten Artikelnummern beim Vergleichen mit der erfassten Barcodeinformation übersprungen. Auf diese Weise lässt sich das Objekt noch effizienter und schneller identifizieren.

Vorzugsweise ist eine bestimmte Reihenfolge der Artikelnummertypen als Standardreihenfolge vorgegeben. Dadurch kann die vorliegende Erfindung besonders komfortabel benutzt werden. Das Identifizieren des Objekts kann dabei, ggf. über mehrere Artikelnummertypen hinweg, automatisch erfolgen, ohne dass notwendigerweise zuvor durch einen Benutzer oder auf sonstige Art eine Vorgabe für die Reihenfolge der Artikelnummertypen erfolgt sein muss.

Es ist vorteilhaft, die Steuerung so auszugestalten, dass sie die Reihenfolge der Artikelnummertypen in Abhängigkeit von wenigstens einer Information festlegt. Dadurch ist die Steuerung sehr flexibel und kann auf einfache Weise auf unterschiedliche Gegebenheiten und Anwendungen eingestellt werden, um eine für die jeweilige Gegebenheit oder Anwendung optimale Reihenfolge der Artikelnummertypen festzulegen. Die Information kann beispielsweise von der Steuerung selbst ermittelt oder von außen vorgegeben werden.

In einer vorteilhaften Ausgestaltung dieses Aspekts der Erfindung ist die wenigstens eine Information eine anwendungs- oder umgebungsabhängige Information, die von der Anwendung der Vorrichtung und/oder der Umgebung, in welcher die Vorrichtung betrieben wird, abhängt. Dadurch kann die Reihenfolge der Artikelnummertypen besonders gut und einfach an eine bestimmte Anwendung bzw. Umgebung angepasst werden.

Beispielsweise kann als Anwendung die Medikamentenerfassung oder als Umgebung eine Apotheke in Frage kommen, so dass die anwendungsabhängige Information (Medikamentenerfassung) bzw. umgebungsabhängige Information (Apotheke) bewirkt, dass die Steuerung den Artikelnummertyp PZN in der Reihenfolge der vorgegebenen Artikelnummertypen an die erste Stelle setzt. An die zweite, dritte und vierte Stelle könnten z.B. die Artikelnummertypen EAN, IAN bzw. LAN gesetzt werden.

In der Küche eines Krankenhauses kann beispielsweise ein Name eines Küchenmitarbeiters als anwendungs- oder umgebungsabhängige Information dienen. Die Steuerung kann dann z.B. so ausgestaltet sein, dass sie nach Erfassen des Namens des Mitarbeiters diesen zunächst automatisch der Küche des Krankenhauses zuordnet und aufgrund dieser Zuordnung dann eine Reihenfolge der Artikelnummertypen vorgibt, welche z.B. von der Häufigkeit der im Küchenbereich zu erwartenden Artikelnummerntypen abhängt. So kann z.B. der Artikelnummertyp EAN an die erste und der Artikelnummertyp PZN an die letzte Stelle gesetzt werden.

Vorzugsweise ist eine Eingabeeinrichtung zum Eingeben der Reihenfolge der Artikelnummertypen durch einen Benutzer vorhanden. Dadurch kann der Benutzer auf einfache Weise komfortabel die für seine Belange optimale Reihenfolge selbst eingeben. Insbesondere kann die gewünschte Reihenfolge vom Benutzer frei definiert werden. Die Eingabeeinrichtung kann beispielsweise eine Tastatur sein.

In einer weiteren vorteilhaften Ausgestaltung ist die Steuerung so ausgestaltet, dass sie dem Benutzer mehrere vordefinierte, unterschiedliche Reihenfolgen von Artikelnummertypen zur Auswahl vorschlägt. Dies ermöglicht dem Benutzer vorteilhafterweise eine besonders einfache und komfortable Festlegung der Reihenfolge.

In einer besonders bevorzugten Ausgestaltung der Erfindung ist die Steuerung so ausgestaltet, dass sie eine Reihenfolge von Artikelnummertypen in Abhängigkeit von einem vorgegebenen Artikelnummertyp festlegt. Der vorgegebene Artikelnummertyp wird hierbei vorzugsweise von einem Benutzer ausgewählt. Insbesondere steht der vorgegebene und vom Benutzer ausgewählte Artikelnummertyp dann an erster Stelle der festgelegten Reihenfolge. Dies sollen die nachfolgend beschriebenen Beispiele veranschaulichen.

Wird z.B. von einem Benutzer vor dem Identifizieren einer Reihe von Objekten der Artikelnummertyp PZN ausgewählt, legt die Steuerung die Reihenfolge der Artikelnummertypen wie folgt fest: PZN, EAN, IAN, LAN.

Wird dagegen von einem Benutzer der Artikelnummertyp EAN ausgewählt, werden von der Steuerung z.B. folgende Reihenfolgen festgelegt: EAN, IAN, LAN, PZN oder EAN, PZN, IAN, LAN.

Auf diese Weise kann die dem vorgegebenen Artikelnummertyp, z.B. PZN, folgende Reihe der Artikelnummertypen, z.B. EAN, IAN, LAN, im Hinblick auf ein schnelles, zuverlässiges Identifizieren der unterschiedlichen Objekte an den vorgegebenen Artikelnummertyp angepasst werden.

Es ist außerdem bevorzugt, die Steuerung so auszugestalten, dass sie nur einen Teil der erfassten Barcodeinformation in Abhängigkeit von der vorgegebenen Reihenfolge der Artikelnummertypen mit in dem Speicher abgespeicherten Artikelnummern vergleicht. Dies ist insbesondere dann vorteilhaft, wenn die erfasste Barcodeinformation neben der Artikelnummer noch weitere Angaben enthält, die für das Identifizieren des Objekts nicht erforderlich sind. Dadurch kann das Identifizieren weiter optimiert und noch schneller durchgeführt werden, insbesondere dann, wenn die Barcodeinformation in einem Barcode des Typs Interleaved codiert war.

Weitere Vorteile der Erfindung ergeben sich aus der folgenden Beschreibung von Ausführungsbeispielen, wobei Bezug auf die beigefügten Zeichnungen genommen wird. Es zeigen:
- Fig. 1: ein Ausführungsbeispiel einer erfindungsgemäßen Vorrichtung,
- Fig. 2A, B: Ablaufdiagramme eines Ausführungsbeispiels des erfindungsgemäßen Verfahrens und
- Fig. 3: ein weiteres Ausführungsbeispiel einer erfindungsgemäßen Vorrichtung in einer Anwendung in einem System zum Erfassen von Speisen in einem Krankenhaus.

Im Folgenden werden, sofern nicht anders angegeben, für gleiche oder gleichwirkende Elemente gleiche Bezugszeichen verwendet.

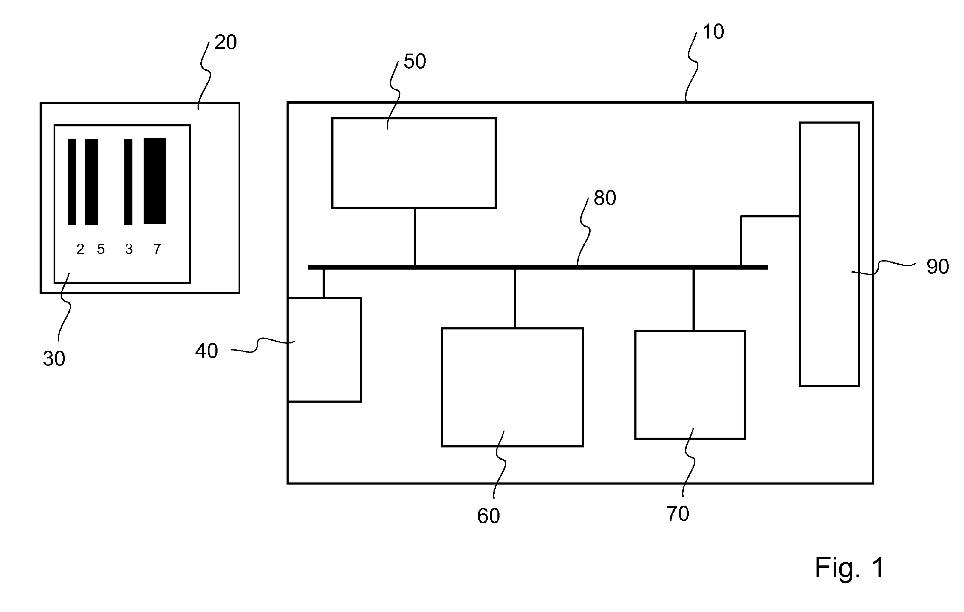

Fig. 1 zeigt ein Ausführungsbeispiel einer erfindungsgemäßen Identifizierungsvorrichtung 10 zum Identifizieren eines Objekts. Im vorliegenden Ausführungsbeispiel wird die Identifizierungsvorrichtung 10 in einem Krankenhaus eingesetzt. Es ist aber ebenso möglich, die Identifizierungsvorrichtung 10 in einer anderen Anwendung oder in einer anderen Umgebung, wie z.B. einer Apotheke, einzusetzen.

Das Objekt kann eine Sache, z.B. ein Medikament, oder eine Person sein, wie z.B. ein Patient in dem Krankenhaus. In der Identifizierungsvorrichtung 10 wird das Objekt mit einem vorab gespeicherten Artikel, z.B. einem bestimmten Medikament bzw. einem bestimmten Patienten, identifiziert.

Prinzipiell unterstützt die Identifizierungsvorrichtung 10 mehrere unterschiedliche Prozesse, für die das Identifizieren eines Objekts erforderlich oder hilfreich ist, wie z.B. in der Materialwirtschaft. Unterstützte Prozesse sind hierbei beispielsweise Materialanforderungen, Bedarfsmeldungen, Wareneingänge, Warenabgänge, Warenrückgaben, Jahresinventuren, Bestellvorschläge oder Eingangslieferscheine.

Darüber hinaus unterstützt die Identifizierungsvorrichtung 10 vorteilhafterweise ebenso das Identifizieren eines Patienten, beispielsweise bei der Speisenerfassung, welche weiter unten näher beschrieben wird.

Im vorliegenden Ausführungsbeispiel ist das Objekt eine Medikamentenpackung 20, die in einem Wareneingang des Krankenhauses für dessen Materialwirtschaftssystem erfasst werden soll. Die Medikamentenpackung 20 ist mit einem Barcode 30 gekennzeichnet, mit dem eine bestimmte Barcodeinformation codiert ist. Die Barcodeinformation beinhaltet insbesondere eine Artikelnummer, die der Medikamentenpackung 20 zugeordnet ist.

Zum Erfassen der Barcodeinformation wird der Barcode 30 von einer Leseeinrichtung, d. h. einem Scanner, gelesen und decodiert. Dabei kann die Leseeinrichtung unterschiedliche Typen von Barcodes, wie z.B. Code39, Code128, EAN13, EAN8, Interleaved 2 of 5, automatisch verarbeiten. Am Ausgang der Leseeinrichtung steht die decodierte, erfasste Barcodeinformation zur Verfügung.

Im vorliegenden Ausführungsbeispiel weist die Identifizierungsvorrichtung 10 eine Eingangsschnittstelle 40 auf, über die die von einer externen Leseeinrichtung erfasste Barcodeinformation des Barcodes 30 von der Identifizierungsvorrichtung 10 empfangen werden kann. Die Identifizierungsvorrichtung 10 weist im dargestellten Beispiel eine eigene Leseeinrichtung 50 auf, die in der Lage ist, Barcodes von Objekten, d. h. auch den Barcode 30 der Medikamentenpackung 20, zu lesen und die darin codierte Barcodeinformation zu erfassen. Die erfasste Barcodeinformation des Barcodes 30 kann somit entweder der Identifizierungsvorrichtung 10 über die Eingangsschnittstelle 40 von außen zugeführt oder über die Leseeinrichtung 50 erfasst werden.

Die Identifizierungsvorrichtung 10 enthält ferner einen Speicher 60, in dem eine Vielzahl von Artikelnummern abgespeichert ist. Diese Artikelnummern sind einerseits mehreren Artikeln und andererseits mehreren unterschiedlichen Artikelnummertypen zugeordnet. Das Abspeichern der Artikelnummern ist hier vorteilhafterweise in Form von einer Tabelle realisiert, durch die auf besonders einfache Weise die Zuordnung der Artikelnummern zu den Artikeln und den Artikelnummertypen umgesetzt werden kann. Ein Beispiel einer solchen Tabelle ist in Tabelle 1 veranschaulicht.

**Tabelle 1: Zuordnung von Artikelnummern zu den Artikeln 1 bis 8 und den Artikelnummertypen PZN, EAN, IAN und LAN.**

| **Artikel** | **Artikelnummertyp** | | | |
|---|---|---|---|---|
| | **PZN** | **EAN** | **IAN** | **LAN** |
| 1 | 2345678 | | 1234 | 12345678 |
| 2 | | 12345678 | | 12345670 |
| 3 | | 23456789 | | 23456701 |
| 4 | | | 3456 | 34567012 |
| 5 | | 45678901 | | 45670123 |
| 6 | 5678901 | | | 56701234 |
| 7 | | | 6789 | 67012345 |
| 8 | | 78901234 | | 70123456 |

In der Tabelle 1 sind beispielhaft mehrere Artikelnummern, wie z.B. 12345678, 2345678, 3456 und 12345670, eingetragen. Die Artikelnummern sind einerseits verschiedenen Artikeln 1 bis 8 und andererseits verschiedenen Artikelnummertypen zugeordnet, nämlich PZN (Pharmazentralnummer), EAN (European Article

Number), IAN (interne Artikelnummer) und LAN (Lieferanten-Artikelnummer des Lieferanten des Objekts).

Dabei können verschiedenen Artikeln 1 bis 8 auch mehrere Artikelnummern unterschiedlichen Artikelnummertyps zugeordnet sein. In der Tabelle 1 sind beispielsweise dem Artikel 1 die Artikelnummer 2345678 des Artikelnummertyps PZN, die Artikelnummer 1234 des Artikelnummertyps IAN und die Artikelnummer 12345678 des Artikelnummertyps LAN zugeordnet.

Jedem Artikel 1 bis 8 sind neben der Artikelnummer bzw. den Artikelnummern im Allgemeinen weitere Daten oder Eigenschaften zugeordnet, die vorzugsweise in der jeweiligen Zeile abgelegt (nicht dargestellt) sind. Bei einem Medikament sind dies z.B. die Angabe des Namens des Medikaments, des Wirkstoffs und der jeweiligen Packungsgröße.

Die Artikelnummertypen entsprechen unterschiedlichen Arten von Artikelnummern und weisen üblicherweise verschiedene Formate, insbesondere verschiedene Artikelnummerlängen, auf. Die unterschiedlichen Artikelnummertypen werden üblicherweise von verschiedenen Organisationen oder offiziellen Stellen vergeben. So werden die EAN und die PZN jeweils von zentralen Stellen vergeben und sind spezifisch für das jeweilige Gut oder den jeweiligen Artikel. Die eigene interne Artikelnummer IAN dagegen wird im dargestellten Beispiel vom Krankenhaus selbst für bestimmte Güter oder Artikel, wie z.B. Medikamente, vergeben. Die Lieferanten-Artikelnummer LAN wird im hier beschriebenen Fall von Lieferanten für Güter oder Artikel vergeben, die sie an das Krankenhaus liefern.

In der Tabelle 1 sind die verschiedenen Artikelnummertypen in einer bestimmten Reihenfolge vorgegeben, durch die eine Hierarchie der Artikelnummertypen definiert wird. Im vorliegenden Ausführungsbeispiel kommt in dieser Reihenfolge an erster Stelle die PZN, dann die EAN, dann die eigene Artikelnummer IAN und zuletzt die Lieferanten-Artikelnummer LAN. Dies ist in der Tabelle 1 durch die Reihenfolge der Platzierungen der Artikelnummertypen von links nach rechts gekennzeichnet. Die vorgegebene Reihenfolge der Artikelnummertypen gibt die Reihenfolge vor, in der Artikelnummern mit der zuvor erfassten Barcodeinformation des Barcodes 30 verglichen werden.

Zum Durchführen dieser Vergleiche weist die Identifizierungsvorrichtung 10 eine Steuerung 70 auf, die entsprechend ausgestaltet ist. Die Steuerung 70, der Speicher 60, die Leseeinrichtung 50 und die Eingangsschnittstelle 40 sind hier jeweils an einen Bus 80 angeschlossen, über den sie miteinander kommunizieren und Daten austauschen können. Die Kommunikation der verschiedenen Komponenten der Identifizierungsvorrichtung 10 wird von der Steuerung 70 gesteuert.

Die Steuerung 70 vergleicht die erfasste Barcodeinformation in Abhängigkeit von der vorgegebenen Reihenfolge der Artikelnummertypen sukzessive mit den in dem Speicher 60 abgespeicherten Artikelnummern. Im vorliegenden Beispiel nach Tabelle 1 werden somit zunächst von oben nach unten die Artikelnummern mit der erfassten Barcodeinformation verglichen, die dem ersten Artikelnummertyp PZN zugeordnet sind. Im Falle einer Übereinstimmung der erfassten Barcodeinformation mit einer der Artikelnummern, die dem ersten Artikelnummertyp PZN zugeordnet sind, wird dasjenige Objekt mit demjenigen Artikel identifiziert, dem diese Artikelnummer zugeordnet ist. Das Identifizieren des Objekts ist dann beendet.

Kann keine Übereinstimmung gefunden werden, so vergleicht die Steuerung die erfasste Barcodeinformation mit den Artikelnummern, die dem in der vorgegebenen Reihenfolge nächsten Artikelnummertyp, nämlich EAN, zugeordnet sind. Kann auch hier keine Übereinstimmung gefunden werden, so vergleicht die Steuerung die erfasste Barcodeinformation mit den Artikelnummern, die dem dann in der vorgegebenen Reihenfolge nachfolgenden Artikelnummertyp, nämlich eigene Artikelnummer, zugeordnet sind. Kann auch hier keine Übereinstimmung gefunden werden, so vergleicht die Steuerung die erfasste Barcodeinformation mit den Artikelnummern, die dem in der vorgegebenen Reihenfolge letzten Artikelnummertyp, nämlich Lieferanten-Artikelnummer, zugeordnet sind.

Kann die Steuerung 70 auch dann keine Übereinstimmung feststellen, so veranlasst sie vorteilhafterweise ein Ausgeben einer entsprechenden Mitteilung, insbesondere einer Fehlermeldung, an einen Benutzer.

Im vorliegenden Ausführungsbeispiel ist die Medikamentenpackung 20 mit einem Barcode 30 des Barcodetyps Code39 gekennzeichnet. Mit dem Barcode 30 ist als Barcodeinformation eine Artikelnummer 5678901 codiert, die den Artikelnummertyp PZN hat. Diese Artikelnummer 5678901 wird von der Leseeinrichtung 50 als Barcodeinformation erfasst und an die Steuerung 70 weitergeleitet. Die Steuerung 70 vergleicht nun die erfasste Artikelnummer 5678901 mit den Artikelnummern, die dem in der vorgegebenen Reihenfolge der Artikelnummertypen ersten Artikelnummertyp PZN zugeordnet sind. Zunächst wird somit die in der Tabelle 1 abgespeicherte erste Artikelnummer 2345678 des Artikelnummertyps PZN mit der erfassten Barcodeinformation verglichen. Da keine Übereinstimmung vorhanden ist, vergleicht die Steuerung 70 die nächste in der Tabelle 1 abgespeicherte Artikelnummer 5678901 des Artikelnummertyps PZN mit der erfassten Barcodeinformation. Hier wird dann eine Übereinstimmung festgestellt. Die Steuerung 70 kann dann die Medikamentenpackung 20 mit dem Artikel 6 identifizieren, welcher der übereinstimmenden Artikelnummer 5678901 zugeordnet ist. Dem Artikel 6 sind Eigenschaften der Medikamentenpackung 20 als zu identifizierendes Objekt zugeordnet, wie z.B. Name und Wirkstoff des Medikaments sowie Packungsgröße.

Die Medikamentenpackung 20 kann somit auf einfache Weise mit einem bestimmten Artikel identifiziert und von dem Materialwirtschaftssystem des Krankenhauses erfasst werden.

Das erfindungsgemäße Vorgeben der Reihenfolge der Artikelnummertypen zum Identifizieren eines Objekts ist insbesondere dann vorteilhaft, wenn mehrere Artikel dieselbe Artikelnummer aufweisen, welche unterschiedlichen Artikelnummertypen zugeordnet ist. Dies ist im Beispiel der Tabelle 1 für die Artikel 1 und 2 der Fall. Dem Artikel 1 ist die Artikelnummer 12345678 des Artikelnummertyps Lieferanten-Artikelnummer LAN zugeordnet. Dieselbe Artikelnummer 12345678 ist dem Artikel 2 als Artikelnummertyp EAN zugeordnet. Sollte daher als Barcodeinformation die Artikelnummer 12345678 erfasst werden, so wird als Artikel, mit dem das Objekt identifiziert wird, der Artikel 2 bestimmt, da der Artikelnummertyp EAN in der vorgegebenen Reihenfolge PZN, EAN, IAN, LAN vor dem Artikelnummertyp Lieferanten-Artikel-Nummer platziert ist. Durch die Erfindung wird in solchen Fällen eine eindeutige Zuordnung des Objekts zu einem Artikel auf einfache Weise gewährleistet.

Zum Vorgeben der Reihenfolge der Artikelnummertypen können in der Identifikationsvorrichtung 10 unterschiedliche Kriterien und Wege vorgesehen sein.

Beispielsweise kann eine bestimmte Reihenfolge der Artikelnummertypen als Standardreihenfolge vorgegeben sein. Diese Standardreihenfolge kann von der Steuerung 70 vorteilhafterweise automatisch festgelegt werden. Sie wird nur dann abgeändert, wenn der Steuerung 70 entsprechende Änderungsvorgaben zugeleitet oder von ihr selbst ermittelt werden.

Es ist ebenso möglich, die Reihenfolge der Artikelnummertypen in Abhängigkeit von wenigstens einer Information festzulegen. Eine solche Information kann insbesondere eine anwendungs- oder umgebungsabhängige Information sein, die von einer Anwendung oder Umgebung, in welcher die Vorrichtung betrieben wird, abhängt. Im Falle des Materialeingangs des Krankenhauses als Anwendung oder Umgebung kann beispielsweise der Name eines Mitarbeiters, der das neu angelieferte Material für das Materialwirtschaftssystem erfasst, als anwendungsabhängige Information dienen. Dieser Mitarbeiter muss sich registrieren, so dass der Identifizierungsvorrichtung 10 sein Name bekannt ist. Durch eine in dem Speicher 60 abgespeicherte Zuordnung des Namens zu seiner Funktion im Krankenhaus kann die Steuerung 70 diesen Mitarbeiter automatisch dem Materialeingang zuordnen. In der Reihenfolge der Artikelnummertypen setzt die Steuerung 70 dann automatisch den Artikelnummertyp PZN an die erste und den Artikelnummertyp EAN an die zweite Stelle. Die weiteren Artikelnummertypen können beispielsweise in beliebiger Reihenfolge diesen beiden Artikelnummertypen nachgeordnet werden.

Die Reihenfolge von nachfolgenden Artikelnummertypen der Reihenfolge der Artikelnummertypen kann beispielsweise von der Steuerung 70 in Abhängigkeit von einem oder mehreren zuerst vorgegebenen Artikelnummertypen der Reihenfolge der Artikelnummertypen festgelegt werden. Wird z.B. aufgrund von einer anwendungsabhängigen Information der Artikelnummertyp EAN als in der Reihenfolge erster Artikelnummertyp vorgegeben, dann wird durch die Steuerung 70 automatisiert die nachfolgende Reihenfolge beispielsweise so festgelegt, dass dann die Artikelnummertypen PZN, Lieferanten-Artikelnummer und schließlich eigene Artikelnummer folgen.

Zum Eingeben der Reihenfolge der Artikelnummertypen durch einen Benutzer ist vorteilhafterweise eine Eingabeeinrichtung vorhanden. Dies ist bei der Identifizierungsvorrichtung 10 mit einer Tastatur 90 der Fall. Die Tastatur 90 ist ebenfalls an den Bus 80 angeschlossen, um mit den übrigen Komponenten der Identifizierungsvorrichtung 10 kommunizieren zu können.

Insbesondere stellt die Steuerung 70 aufgrund der über die Tastatur 90 eingegebenen Vorgaben des Benutzers im Speicher 60 die Reihenfolge der Artikelnummertypen entsprechend ein. Der Benutzer kann somit die für seine Belange optimale Reihenfolge der Artikelnummertypen selbst, und insbesondere frei, eingeben. Dazu kann die Steuerung ggf. so ausgestaltet sein, dass sie dem Benutzer mehrere vordefinierte, unterschiedliche Reihenfolgen von Artikelnummertypen zur Auswahl vorschlägt.

Die Steuerung 70 kann vorteilhafterweise so ausgestaltet sein, dass sie nur einen Teil der erfassten Barcodeinformation in Abhängigkeit von der vorgegebenen Reihenfolge der Artikelnummertypen mit in dem Speicher 60 abgespeicherten Artikelnummern vergleicht.

Die Steuerung 70 ist vorteilhafterweise zusätzlich in der Lage, die erfasste Barcodeinformation des Barcodes 30 in Abhängigkeit von wenigstens einer ihrer Eigenschaften, wie z.B. ihrer Länge, mit in dem Speicher abgespeicherten Artikelnummern zu vergleichen und die Reihenfolge der Artikelnummertypen abhängig von der wenigstens einen Eigenschaft vorzugeben. Dazu kann die Steuerung 70 einen Artikelnummertyp der vorgegebenen Reihenfolge in Abhängigkeit von der wenigstens einen Eigenschaft der erfassten Barcodeinformation beim Vergleichen der erfassten Barcodeinformation mit in dem Speicher abgespeicherten Artikelnummern überspringen. Im oben, anhand der Tabelle 1 geschilderten Beispiel können beispielsweise die Artikelnummern des in der vorgegebenen Reihenfolge zuerst aufgeführten Artikelnummertyps PZN beim Vergleichen übersprungen werden, falls zuvor festgestellt wurde, dass die erfasste Barcodeinformation wenigstens acht Zeichen aufweist. Da die Artikelnummern des Artikelnummertyps PZN üblicherweise nur sieben Zeichen lang sind, kann der Artikelnummertyp PZN dann nicht vorliegen.

Vorteilhafterweise untersucht die Steuerung 70 die erfasste Barcodeinformation hinsichtlich der wenigstens einen ihrer Eigenschaften selbst. Es ist aber ebenso möglich, Angaben über die Eigenschaften der Barcodeinformation der Steuerung 70 von außerhalb der Identifizierungsvorrichtung 10 zu übermitteln.

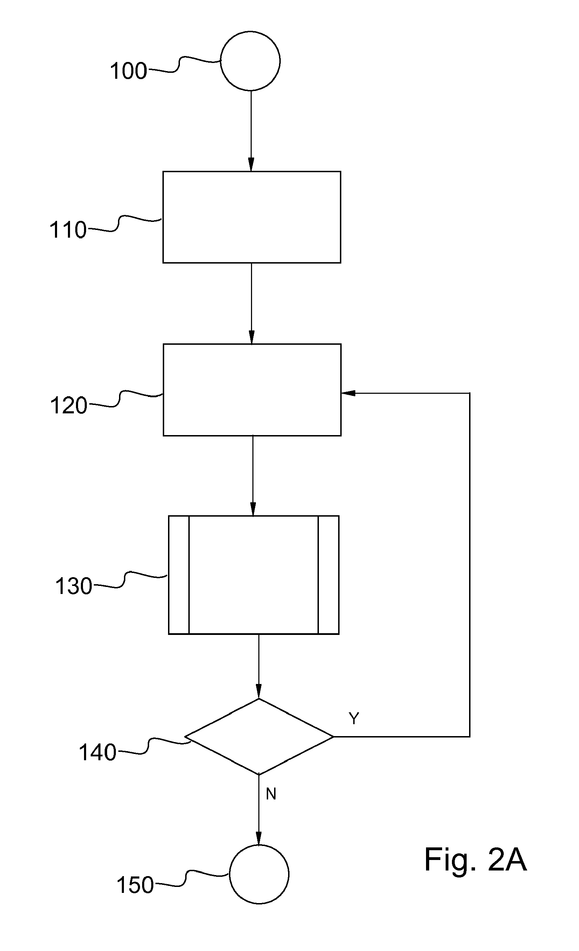

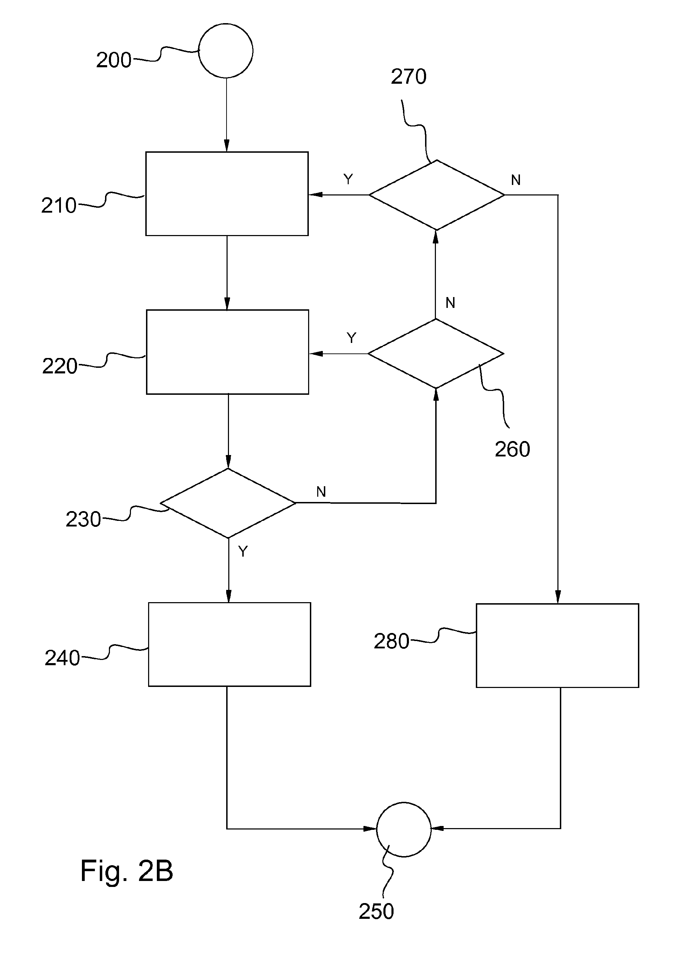

Die Fig. 2A und B zeigen Ablaufdiagramme eines Ausführungsbeispiels des erfindungsgemäßen Verfahrens. Der Ablauf des erfindungsgemäßen Verfahrens kann insbesondere durch die Steuerung 70 mittels der Identifizierungsvorrichtung 10 durchgeführt werden.

Fig. 2A zeigt einen Verfahrensschritt 100, in dem das automatische Identifizieren des Objekts, beispielsweise der Medikamentenpackung 20, beginnt. In einem nachfolgenden Schritt 110 wird dann die Reihenfolge der Artikelnummertypen definiert, anhand welcher später die abgespeicherten Artikelnummern mit der erfassten Barcodeinformation verglichen werden sollen. In einem Schritt 120 wird dann der Barcode gelesen, mit dem das zu identifizierende Objekt gekennzeichnet ist, und dessen Barcodeinformation erfasst. Diese Barcodeinformation wird dann in einem Schritt 130 mit den Artikelnummern entsprechend der vorgegebenen Reihenfolge von Artikelnummertypen verglichen, um diejenige Artikelnummer zu bestimmen, bei der eine Übereinstimmung vorliegt. Über den der bestimmten Artikelnummer zugeordneten Artikel wird dann das Objekt identifiziert. Der Schritt 130 wird weiter unten anhand der Fig. 2B näher erläutert.

In einem folgenden Schritt 140 wird dann überprüft, ob ein neuer Barcode gescannt worden ist, mit dem ein weiteres, zu identifizierendes Objekt gekennzeichnet ist. Ist dies der Fall, dann wird das Verfahren bei Schritt 120 fortgesetzt. Ist dies nicht der Fall, dann folgt ein Schritt 150, in dem das Identifizieren von Objekten beendet wird.

Fig. 2B zeigt das Ablaufdiagramm der verschiedenen Unterschritte des Verfahrensschritts 130 gemäß Fig. 2A. In einem Schritt 200 beginnt das Identifizieren des Objekts. Anschließend wird in einem Schritt 210 ein nächster Artikelnummertyp der zuvor im Schritt 120 festgelegten Reihenfolge ausgewählt. In einem Schritt 220 wird eine nächste abgespeicherte Artikelnummer ausgewählt, die dem im Schritt 210 ausgewählten Artikelnummertyp zugeordnet ist. Daraufhin wird in einem Schritt 230 überprüft, ob die ausgewählte Artikelnummer mit der erfassten Barcodeinformation übereinstimmt. Ist dies der Fall, dann wird anschließend in einem Schritt 240 diese Übereinstimmung verarbeitet und das Objekt über die der gefundenen Artikelnummer zugeordnete Artikel identifiziert. In einem Schritt 250 wird dann das Identifizieren des Objekts beendet und das Verfahren verzweigt zum Schritt 140.

Wird im Schritt 230 dagegen festgestellt, dass die ausgewählte Artikelnummer nicht mit der erfassten Barcodeinformation übereinstimmt, dann verzweigt das erfindungsgemäße Verfahren zu einem Schritt 260, in dem überprüft wird, ob dem ausgewählten Artikelnummertyp eine weitere Artikelnummer zugeordnet ist. Ist dies der Fall, dann verzweigt das Verfahren zum Schritt 220 und wählt die nächste Artikelnummer aus. Ist dies nicht der Fall, dann folgt dem Schritt 260 ein Schritt 270, in dem überprüft wird, ob in der Reihenfolge der Artikelnummertypen ein weiterer Artikelnummertyp vorhanden ist. Ist dies der Fall, dann verzweigt das Verfahren zum Schritt 210, in dem der nächste Artikelnummertyp ausgewählt wird. Ist dies nicht der Fall, dann verzweigt das Verfahren zu einem Schritt 280, in dem an den Benutzer eine geeignete Mitteilung ausgegeben wird, dass keine Übereinstimmung gefunden und das Objekt nicht identifiziert werden konnte. Anschließend folgt dann der Schritt 250, in dem das Identifizieren des Objekts beendet wird und das Verfahren zum Schritt 140 verzweigt.

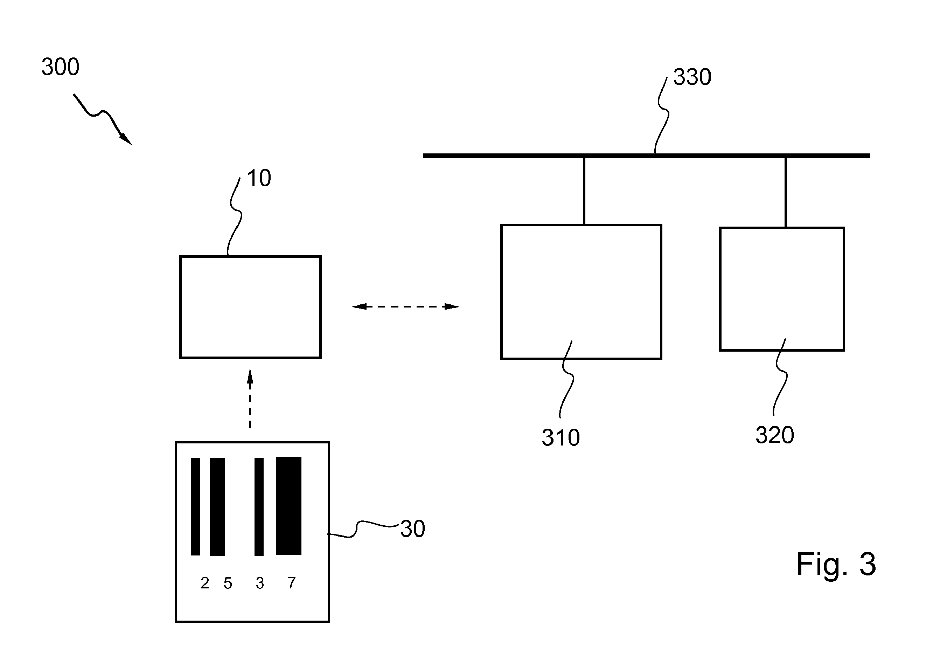

Fig. 3 zeigt ein weiteres Ausführungsbeispiel einer erfindungsgemäßen Identifizierungsvorrichtung 10 in einer Anwendung in einem System 300 zum Erfassen von Speisen in dem Krankenhaus. Die Identifizierungsvorrichtung 10 ist hier ein mobiles Gerät, das insbesondere von einem Benutzer in ein Patientenzimmer des Krankenhauses mitgenommen werden kann. Jeder Patient des Krankenhauses besitzt zur vereinfachten Bearbeitung einen ihm zugeordneten Barcode, welcher z.B. am Bett des Patienten angebracht ist. Dieser Barcode kann von der mobilen Identifizierungsvorrichtung 10 gelesen und die in ihm codierten Barcodeinformationen können erfasst werden. In diesem Fall ist somit eine Person, d. h. hier der Patient, das zu identifizierende Objekt.

Die bei dieser Anwendung verwendeten Barcodes können Barcodes unterschiedlichen Typs sein. Je nach eingesetztem Barcodetyp können unterschiedliche Wege der Verarbeitung der erfassten Barcodeinformation gewählt werden. Beispielsweise können bei einem Barcode des Typs Interleaved nur einzelne Abschnitte des Barcodes oder der erfassten Barcodeinformation verwendet werden, um sie abhängig von einer vorgegebenen Reihenfolge von Artikelnummertypen mit abgespeicherten Artikelnummern zu vergleichen. In einem Barcode des Typs Interleaved können z.B. neben einer Patientennummer auch eine Angabe über das Krankenhaus codiert sein. Diese Krankenhausangabe wird hier allerdings nicht benötigt. Vorteilhafterweise kann durch den Benutzer vorgegeben werden, welcher Abschnitt des Barcodes oder der erfassten Barcodeinformation für die weitere Verarbeitung verwendet werden soll.

Bei einem Barcode des Typs Code39 kann die erfasste Barcodeinformation der Einfachheit halber vollständig für die weitere Verarbeitung übernommen werden.

Die mobile Identifizierungsvorrichtung 10 kann an eine Workstation 310 des Systems 300 angeschlossen werden, um die auf der mobilen Identifizierungsvorrichtung 10 verfügbaren Daten, insbesondere Artikelnummern zum Identifizieren der Patienten, aktuell zu halten. Es ist auch möglich, die mobile Identifizierungsvorrichtung 10 mittels einer drahtlosen Funkverbindung mit der Workstation 310 zu verbinden. Üblicherweise sind die aktuellen Artikelnummern in einer Datenbank 320 des Systems 300 abgelegt. Mittels eines auf der Workstation 310 vorhandenen Software-Programms kann die Workstation 310 die erforderlichen Daten, insbesondere Artikelnummern, aus der Datenbank 320 auslesen und in den Speicher 60 der Identifizierungsvorrichtung 10 übertragen. Die Workstation 310 ist dazu über einen Bus 330 mit der Datenbank 320 verbunden. Die mobile Identifizierungsvorrichtung 10 ist dann in der oben beschriebenen Weise in der Lage, die erfasste Barcodeinformation mit den abgespeicherten Artikelnummern zu vergleichen und somit auf einfache und zuverlässige Weise den Patienten zu identifizieren.

Mittels der mobilen Identifizierungsvorrichtung 10 kann auf einfache Weise eine Zuordnung des über seinen Barcode erfassten Patienten zu Speisen erfolgen, die von der Küche des Krankenhauses zur Versorgung des Patienten angeboten werden. Der Patient kann beispielsweise unter mehreren Speisen auswählen. Die Auswahl des Patienten wird dann in die mobile Identifizierungsvorrichtung 10 eingegeben und dem Patienten automatisch zugeordnet. Ferner kann die Auswahl der Speisen automatisch einem Verwaltungssystem der Küche übermittelt werden, so dass die zum Versorgen der Patienten des Krankenhauses erforderliche Anzahl von ausgewählten Speisen auf einfache Weise ermittelt werden kann.

## Patentansprüche

1. Vorrichtung (10) zum Identifizieren eines Objekts (20) mit einem Artikel (1 - 8) in Abhängigkeit von einer erfassten Barcodeinformation eines Barcodes (30), mit dem das Objekt (20) **gekennzeichnet** ist, mit
- einem Speicher (60), in dem mehrere Artikelnummern abgespeichert sind, die einerseits mehreren Artikeln (1 - 8) und andererseits mehreren unterschiedlichen Artikelnummertypen (PZN, EAN, IAN, LAN) zugeordnet sind, und
- einer Steuerung (70), die so ausgestaltet ist, dass sie die erfasste Barcodeinformation in Abhängigkeit von einer vorgegebenen Reihenfolge der Artikelnummertypen (PZN, EAN, IAN, LAN) mit in dem Speicher (60) abgespeicherten Artikelnummern vergleicht und im Falle einer Übereinstimmung der erfassten Barcodeinformation mit einer der abgespeicherten Artikelnummern das Objekt (20) mit dem dieser Artikelnummer zugeordneten Artikel (1 - 8) identifiziert.

2. Vorrichtung nach Anspruch 1, wobei eine Erfassungseinrichtung (50) zum Erfassen der im Barcode (30) enthaltenen Barcodeinformation vorhanden ist und die Erfassungseinrichtung (50) mit der Steuerung (70) verbunden ist, sodass die erfasste Barcodeinformation an die Steuerung (70) übertragen werden kann.

3. Vorrichtung nach Anspruch 1 oder 2, wobei die Steuerung (70) ferner so ausgestaltet ist, dass sie die erfasste Barcodeinformation zusätzlich in Abhängigkeit von wenigstens einer Eigenschaft der erfassten Barcodeinformation mit in dem Speicher (60) abgespeicherten Artikelnummern vergleicht.

4. Vorrichtung nach Anspruch 3, wobei die Steuerung (70) so ausgestaltet ist, dass ein Artikelnummertyp (PZN, EAN, IAN, LAN) der vorgegebenen Reihenfolge der Artikelnummertypen (PZN, EAN, IAN, LAN) in Abhängigkeit von der wenigstens einen Eigenschaft der erfassten Barcodeinformation beim Vergleichen der erfassten Barcodeinformation mit in dem Speicher (60) abgespeicherten Artikelnummern übersprungen wird.

5. Vorrichtung nach einem der vorhergehenden Ansprüche, wobei eine bestimmte Reihenfolge der Artikelnummertypen (PZN, EAN, IAN, LAN) als Standardreihenfolge vorgegeben ist.

6. Vorrichtung nach einem der vorhergehenden Ansprüche, wobei die Steuerung (70) so ausgestaltet ist, dass sie die Reihenfolge der Artikelnummertypen (PZN, EAN, IAN, LAN) in Abhängigkeit von wenigstens einer Information festlegt.

7. Vorrichtung nach Anspruch 6, wobei die wenigstens eine Information eine anwendungs- und/oder umgebungsabhängige Information ist, die von einer Anwendung der Vorrichtung (10) bzw. einer Umgebung, in welcher die Vorrichtung (10) betrieben wird, abhängt.

8. Vorrichtung nach einem der vorhergehenden Ansprüche, wobei eine Eingabeeinrichtung (90) zum Eingeben der Reihenfolge der Artikelnummertypen (PZN, EAN, IAN, LAN) durch einen Benutzer vorgesehen ist.

9. Vorrichtung nach Anspruch 8, wobei die Steuerung (70) so ausgestaltet ist, dass sie dem Benutzer mehrere vordefinierte, unterschiedliche Reihenfolgen von Artikelnummertypen (PZN, EAN, IAN, LAN) zur Auswahl vorschlägt.

10. Vorrichtung nach einem der vorhergehenden Ansprüche, wobei die Steuerung (70) so ausgestaltet ist, dass sie eine Reihenfolge von Artikelnummertypen (PZN, EAN, IAN, LAN) in Abhängigkeit von einem vorgegebenen Artikelnummertyp (PZN, EAN, IAN, LAN) festlegt.

11. Vorrichtung nach Anspruch 10, wobei die Reihenfolge von Artikelnummertypen (PZN, EAN, IAN, LAN) in Abhängigkeit von einem durch einen Benutzer vorgegebenen Artikelnummertyp (PZN, EAN, IAN, LAN) festlegt wird.

12. Vorrichtung nach Anspruch 10 oder 11, wobei der vorgegebene Artikelnummertyp (PZN, EAN, IAN, LAN) an erster Stelle der vorgegebenen Reihenfolge der Artikelnummertypen (PZN, EAN, IAN, LAN) steht.

13. Vorrichtung nach einem der vorhergehenden Ansprüche, wobei die Steuerung (70) so ausgestaltet ist, dass sie nur einen Teil der erfassten Barcodeinformation in Abhängigkeit von der vorgegebenen Reihenfolge der Artikelnummertypen (PZN, EAN, IAN, LAN) mit in dem Speicher (60) abgespeicherten Artikelnummern vergleicht.

14. Verfahren zum Identifizieren eines Objekts (20) mit einem Artikel (1 - 8) in Abhängigkeit von einer erfassten Barcodeinformation eines Barcodes (30), mit dem das Objekt (20) **gekennzeichnet** ist, wobei
- in einem Speicher (60) mehrere Artikelnummern abgespeichert sind, die einerseits mehreren Artikeln (1 - 8) und andererseits mehreren unterschiedlichen Artikelnummertypen (PZN, EAN, IAN, LAN) zugeordnet sind, und
- die erfasste Barcodeinformation in Abhängigkeit von einer vorgegebenen Reihenfolge der Artikelnummertypen (PZN, EAN, IAN, LAN) mit in dem Speicher (60) abgespeicherten Artikelnummern verglichen und im Falle einer Übereinstimmung der erfassten Barcodeinformation mit einer der abgespeicherten Artikelnummern das Objekt (20) mit dem dieser Artikelnummer zugeordneten Artikel (1 - 8) identifiziert wird.
